# NEUE EUROPÄISCHE PATENTSCHRIFT

(11) **EP 1 595 633 B2**
(45) Veröffentlichungstag und Bekanntmachung des Hinweises auf die Entscheidung über den Einspruch: **09.10.2013**
(45) Hinweis auf die Patenterteilung: 26.08.2009
(21) Anmeldenummer: 04011321.9
(22) Anmeldetag: 12.05.2004
(51) Int. Cl.: B23K 9/04, C22C 19/05

(54) **Verwendung eines Schutzgasgemisches beim Schweissen**
Gas mixture use for welding
Utilisation d'un mélange gazeux en soudage.

(43) Veröffentlichungstag der Anmeldung: 16.11.2005
(73) Patentinhaber: Siemens Aktiengesellschaft, 80333 München (DE)
(72) Erfinder: Wilkenhöner, Rolf Dr., 14532 Kleinmachnow (DE)

(56) Entgegenhaltungen:
- EP-A- 0 163 379
- EP-A- 0 826 456
- US-A- 5 306 358
- US-A1- 2002 134 761

## Beschreibung

Die Erfindung betrifft eine Verwendung eines Schutzgasgemisches gemäß dem Oberbegriff des Anspruchs 1.

Eine derartige Verwendung geht beipielsweise aus der US 5 374 319 oder der US 5 306 358

Bauteile, die mechanischen und/oder thermischen Belastungen ausgesetzt sind, wie z.B. Bauteile einer Gas- oder Dampfturbine, weisen oft nach ihrem Einsatz Risse auf.

Solche Bauteile können jedoch wieder verwendet werden, wenn die Substrate der Bauteile repariert werden. Die Risse werden beispielsweise durch Zuschweißen oder Auftragsschweißen repariert.

Superlegierungen auf Nickel-Basis können beim Verbindungsschweißen Risse bilden. Die entstehenden Risse werden als Heißrisse bezeichnet.

Es können prinzipiell mehrere Arten von Heißrissen unterschieden werden (Merkblatt DVS 1004-1: Heißrissprüfverfahren, Grundlagen, Düsseldorf, Deutscher Verband für Schweißtechnik, 11/96) .
Beim Schweißen schmelzen die Korngrenzen (Gefügebereich) beispielsweise auf, da der Werkstoff in solchen Gefügebereichen anschmelzen kann, deren Solidustemperatur unterhalb der Gleichgewichtssolidustemperatur der mittleren Zusammensetzung der Legierung liegt. Zu diesen Gefügebereichen zählen Phasen, die sich bereits während der Herstellung des Werkstoffs herausgebildet haben (zum Beispiel niedrigschmelzende Sulfide, Risse, die durch einen Abfall der Zähigkeit bei hohen Temperaturen entstehen (DDC, Ductility Dip Cracks), können einen größeren Abstand zur Schmelzlinie aufweisen. Sie werden bei Temperaturen gebildet, die unterhalb derer liegen, welche für die Entstehung von Wiederaufschmelzrissen nötig sind. Der Abfall der Zähigkeit kann dazu führen, dass Kontraktionsspannungen während des Abkühlens zur Rissinitiierung führen.

Eine Belegung der Korngrenzen mit Fremdphasen (z.B. Karbiden) kann die Bildung von Heißrissen begünstigen. Dies ist zum Beispiel dann der Fall, wenn die Phasen aufgrund ihrer Form als innere Kerben wirken, so dass Kontraktionsspannungen eher zu einer Rissbildung führen. Dies ist auch dann der Fall, wenn die Fremdphasen bei höheren Temperaturen schmelzen als der Grundwerkstoff, so dass sich Flüssigkeitsfilme auf den Korngrenzen bilden (konstitutionelles Aufschmelzen von Karbiden, Sulfiden oder Boriden etc.).

Ein weiteres Problem beim Auftragsschweißen von Superlegierungen ist eine mögliche Oxidation der Schweißstelle während des Schweißens. Eine Oxidation der Schweißstelle erschwert großflächige Schweißungen durch überlappendendes oder mehrlagiges Schweißen von einzelnen Raupen, da die Anbindung zwischen den einzelnen Raupen zunehmend erschwert wird. Es können Bindefehler entstehen, welche die mechanische Integrität der Schweißung beeinträchtigen. Zudem führt Sauerstoff zu einer interkristallinen Korrosion entlang der Korngrenzen der Schweißstelle. Dadurch werden die Korngrenzen geschwächt und versprödet, was die Bildung von Rissen an den Korngrenzen begünstigt und die mechanischen Eigenschaften verschlechtert.

Der Effekt der Verringerung der Heißrissanfälligkeit durch einen Zusatz von Stickstoff zum Schutzgas ist in der Literatur für die mischkristallgehärtete Legierung NiCr25FeAlY (2.4633) beschrieben (DVS-Band 225 (2003), S. 249-256).

Ein Schutzgasgemisch mit 2.0-3.7%N₂ und 0.5-1.2%H₂ ist aus der EP 0 826 456 B1 bekannt für das WIG-Schweißen von austenitischen Stählen, wobei der Austenit sich bei den Schweißtemperaturen während des Abkühlens schlecht bildet (zu schnelle Abkühlung). Hierbei wird der Stickstoff zur Verringerung des Ferritgehalts an der Schweißstelle von korrosionsbeständigen, austenitischen Stählen zugesetzt, da Stickstoff als Austenitbildner bekannt ist, weil die unerwünschte δ-Ferritphase im Phasendiagramm durch Stickstoff zu höheren Temperaturen verschoben wird, so dass der Phasenbereich von γ-Austenit sich vergrößert und sich daher bevorzugt bildet. Wasserstoff wird zugesetzt, um die Standzeit der Wolframelektrode zu erhöhen.

Die EP 0 163 379 A2 offenbart ein Schweißverfahren bei dem Stickstoff zu dem Inertgas hinzugefügt wird. Der Stickstoff wird nur deshalb zugegeben, weil bei dem Verfahren stickstoffenthaltende (0.15-0.25wt%) Legierungen geschweißt werden.

Die US-Patentschriften 5,897,801, 5,554,837, 5,106,010, 6,124,568, 6,333,484, 6,054,672 sowie 6,037,563 offenbaren Verfahren und Vorrichtungen zum Schweißen von Metallen.

Die US-PS 6,024,792 offenbart ein Verfahren zum Auftragsschweißen. Bei dem Auftragsschweißen wird ein Laserstrahl oder Elektronenstrahl verwendet um Pulver aufzuschmelzen.

Es ist daher Aufgabe der Erfindung durch Verringerung der Oxidbildung und der Bildung von niedrigschmelzenden kristallinen oder amorphen Phasen wie z.B. Oxiden, Boriden, Karbiden, Nitriden, Oxycarbonitriden auf den Korngrenzen die Rissanfälligkeit nach dem Schweißen zu überwinden.

Die Aufgabe wird gelöst durch die Verwendung eines Schutzgasgemisches gemäß Anspruch 1.

In den Unteransprüchen sind weitere vorteilhafte Maßnahmen aufgelistet.
Die in den Unteransprüchen aufgelisteten Maßnahmen können in vorteilhafter Art und Weise miteinander kombiniert werden.

Es zeigen:
Figur 1 ein Bauteil nach dem Stand der Technik,
Figur 2, 3, 4 ein Bauteil 1, das mittels des erfindungsgemäßen Verfahrens behandelt wird,
Figur 5 ein Bauteil 1 nach Beendigung des Verfahrens,
Figur 6 eine Auflistung verwendbarer Legierungen,
Figur 7 eine Turbinenschaufel als beispielhaftes Bauteil und
Figur 8 eine Gasturbine.

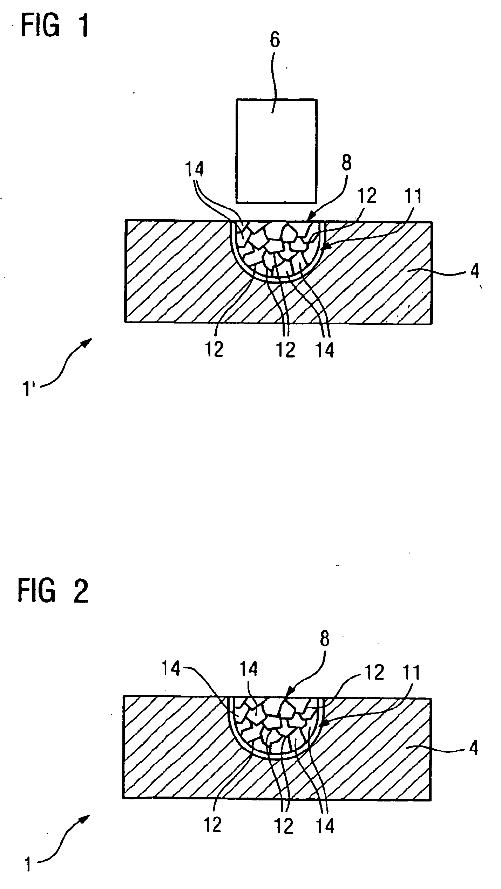

Figur 1 zeigt eine Schweißnaht nach dem Stand der Technik (EP 0 826 456).
Ein Bauteil 1' mit einem Substrat 4 weist eine Schweißnaht 8 auf, die mit einer Wolframanode 6 erzeugt wurde. In der Schweißnaht 8 der Schweißstelle 11 im Substrat 4 wird der Ferritgehalt beim Schweißen durch Stickstoff gesenkt, d.h. in den Körnern 14, aus denen die Schweißnaht 8 besteht, wird der Ferritgehalt (Kristallstruktur) durch Stickstoff im Schutzgas abgesenkt.

Anhand Figur 2 wird die Erfindung näher erläutert.
Durch die Verwendung von Stickstoff und/oder Wasserstoff in dem Schutzgas wird eine Bildung von niedrigschmelzenden Phasen auf den Korngrenzen 12 (und nicht in den Körnern 14), die die Körner 14 begrenzen, reduziert oder verhindert.

Der Stickstoff bei den hier verwendeten nickelbasierten Werkstoffen hat keinen Einfluss auf die Phasenbildung in den Körnern des Werkstoffs, die auch Austenite sind, da der Eisengehalt gar nicht als Legierungsbestandteil (Fe ≈ 0%) enthalten ist, sondern höchstens in Form von unerwünschten Verunreinigungen enthalten ist.
Außerdem bilden die nickelbasierten Werkstoffe sehr bevorzugt stabile Austenite, so dass gar keine Notwendigkeit besteht, Austenitbildner wie Stickstoff beim Schweißen zu verwenden.

Aufgrund des geringen oder gar nicht vorhandenen Eisengehalts stellt auch die Ferritbildung insbesondere bei den nickelbasierten Werkstoffen hier kein Problem dar (bilden keine Ferrite).

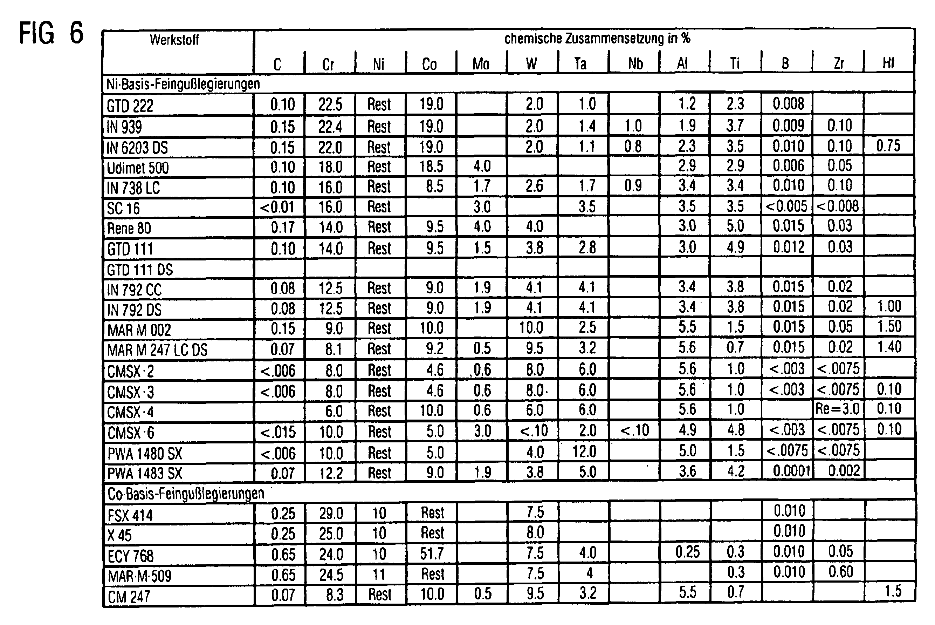

Figur 6 zeigt eine Auflistung von solchen Werkstoffen, für die das Schutzgas verwendet werden kann.
Ebenso ist in den Legierungen Stickstoff als Legierungsbestandteil nicht erwünscht (max. 100 ppm).

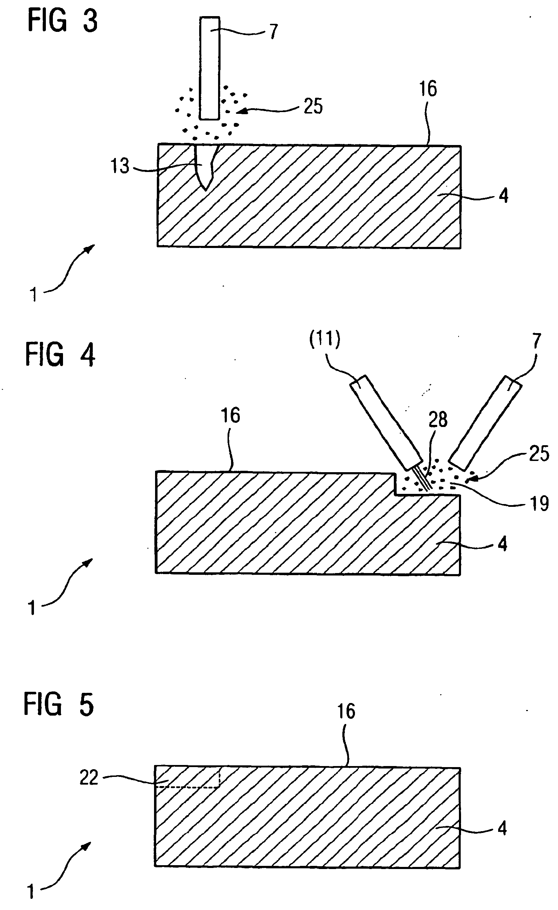

Figur 3 zeigt ein Bauteil 1, das mittels des erfindungsgemäßen Verfahrens behandelt wird.

Das Bauteil 1 weist ein Substrat 4 auf, das insbesondere aus einer nickelbasierten Superlegierung und nicht aus einer Legierung auf Eisenbasis besteht. Die Legierung des Bauteils 1 oder der Superlegierung ist ausscheidungsgehärtet.

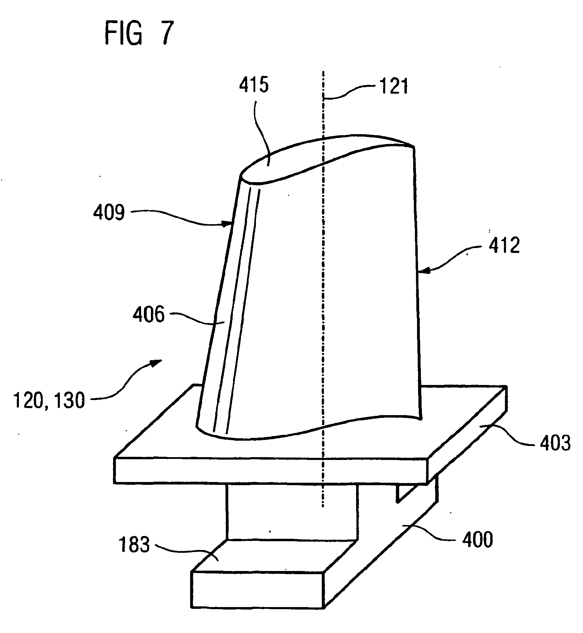

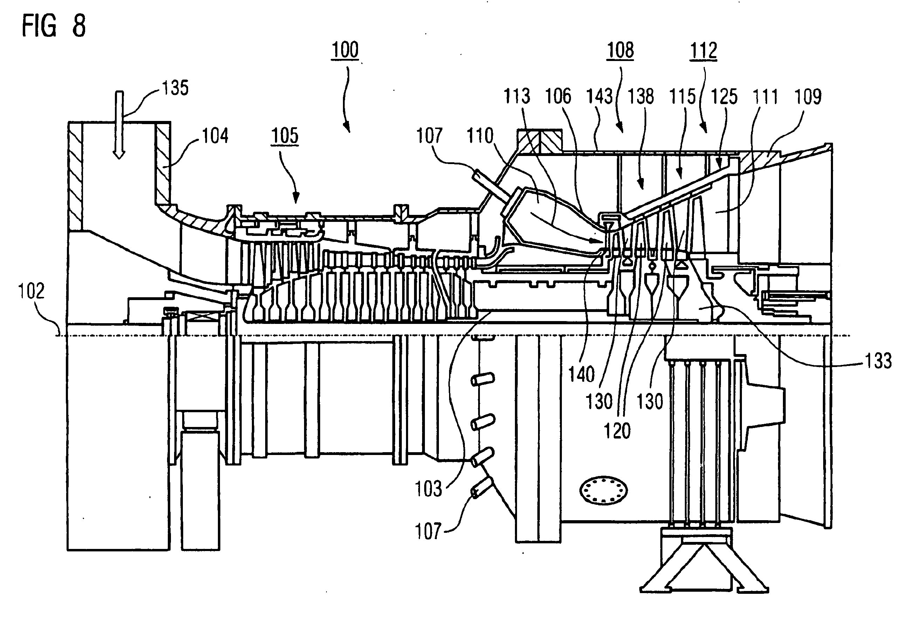

Das Bauteil 1 ist beispielsweise eine Turbinenschaufel 120, 130 (Fig. 7) einer Turbine, insbesondere einer Gasturbine 100 (Fig. 8) für ein Kraftwerk oder ein Flugzeug.
Das Substrat 4 weist nach der Herstellung oder nach dem Einsatz einen Riss 13 auf, der repariert werden soll.

Das kann dadurch geschehen, dass mittels einer Elektrode 7, beispielsweise auch einer Wolframelektrode, oder eines Laser oder Elektronenstrahls 7 der Riss 13 verschlossen wird.

Wenn Elektroden beim Schweißen verwendet werden, können auch andere Elektroden als Wolframelektroden verwendet werden.

Dabei wird das erfindungsgemäße Schutzgas 25 verwendet, das um den Riss 13 gespült wird oder in einer Box (nicht dargestellt), die den Riss 13 umgibt, vorhanden ist.

Figur 4 zeigt ein Bauteil 1, das ebenfalls mittels eines weiteren erfindungsgemäßen Verfahrens behandelt wird.

Das Substrat 4 weist einen Bereich 19 (Vertiefung) auf, der z.B. einen Riss oder korrodierte Oberflächenbereiche aufgewiesen hat. Diese wurden entfernt und müssen für den Wiedereinsatz des Bauteils 1 mit neuem Material 28 bis zur Oberfläche 16 des Substrats 4 aufgefüllt werden.

Dies geschieht beispielsweise durch Auftragsschweißen. Dabei wird beispielsweise mittels eines Pulverförderers 11 Material (Schweißwerkstoff) 28 dem Bereich 19 zugeführt, das durch eine Schweißelektrode 7 oder einen Laser 7 aufgeschmolzen wird.
Dies kann, wie im Stand der Technik (US 6,024,792) beschrieben, durchgeführt werden.

Jedoch wird das erfindungsgemäße Schutzgasgemisch 25 verwendet, das die aufgeschmolzenen oder heißen Bereiche 19 umgibt oder umspült, um die Entstehung von Oxiden und/oder niedrigschmelzenden Phasen auf den Korngrenzen 12 zu verringern.

Figur 5 zeigt ein Bauteil 1 nach Durchführung des Verfahrens gemäß Figur 1 oder 2.

Das Substrat 4 weist keine Risse 13 oder Bereiche 19, die entfernt wurden, mehr auf. Gestrichelt angedeutet ist der Bereich 22, in dem vorher Risse 13 vorhanden waren oder Material abgetragen wurde.

Das Bauteil 1 kann jetzt wieder wie ein neu hergestelltes Bauteil eingesetzt und wieder beschichtet werden.

Eine Möglichkeit zur Vermeidung von Heißrissen bei den Verfahren gemäß Figuren 3 oder 4 ist die Verringerung des Temperatur- und damit der Spannungsgradienten zwischen Schweißstelle und dem Rest des Bauteils. Dies wird durch eine Vorwärmung des Bauteils während des Schweißens erreicht, beispielsweise beim manuellen WIG-Schweißen in einer Schutzgasbox, wobei die Schweißstelle induktiv (mittels Induktionsspulen) auf Temperaturen größer 900°C vorgewärmt wird.

Das Schutzgas 25, das während des Schweißprozesses verwendet wird, weist Anteile von Stickstoff und/oder Wasserstoff und Inertgas wie beispielsweise Argon auf.

Der Wasserstoff in dem Schutzgas 25 bindet sich mit Sauerstoff, der aus der Legierung oder der Umgebung kommt. Dadurch wird die Oxidation des Schweißguts vermieden oder verringert. So können großflächige Schweißungen in guter Qualität ohne mechanische Bearbeitung der jeweils zuvor aufgetragenen Schweißraupe (dabei stellt eine Oberfläche einer Schweißraupe auch eine Korngrenze 12 dar) zur Abtragung der angelaufenen / oxidierten Bereiche ermöglicht werden. Zugleich wird eine interkristalline Korrosion verhindert, welche die Korngrenzen schwächen würde. Dadurch wird die Rissanfälligkeit verringert, und die mechanischen Eigenschaften der Werkstoffe werden verbessert.
Hierfür sind Zugaben von Wasserstoff im Bereich von 0.3 bis 25 vol% geeignet, insbesondere 0,5-3vol% oder etwa 0,7 vol%.

Stickstoff kann z.B. die Bildung von gröberen Primärkarbiden auf den Korngrenzen unterdrücken oder verringern. Es bilden sich weniger und feinere Primärkarbide. Zum Teil werden eher Karbonitride als Primärkarbide gebildet. Auch dadurch wird die Heißrissanfälligkeit verringert. Es sind Zugaben von Stickstoff im Bereich von 1 bis 20 vol% geeignet, insbesondere 1-12 vol% bzw. etwa 3 vol%.

Bei der Anwendung dieses speziellen Schutzgases 25, wird die Heißrissanfälligkeit beim Schweißen von Nickelsuperlegierungen (Figur 6) verringert und zugleich das Bauteil vor Oxidation geschützt.

Ein Anwendungsbeispiel ist das artgleiche Schweißen der Legierung Rene80, eines nickelbasierten Werkstoffs, der ausscheidungsgehärtet ist, mittels manuellem Plasmapulverauftragsschweißen.

Ziel ist die Schweißreparatur von betriebsbeanspruchten Gasturbinenschaufeln. Die Schweißreparatur soll Eigenschaften im Bereich des Grundwerkstoffs besitzen, so dass artgleich geschweißt werden muss.
Dabei wird als Schutzgas 25 ein Gemisch aus 96.3 vol% Ar, 3 vol% N₂ und 0.7 vol% H₂ verwendet. Eine wesentlich verringerte Heißrissanfälligkeit bei gleichzeitig verringerter Oxidation des Schweißgutes im Vergleich zum herkömmlichen Schutzgas Ar5.0 (Ar > 99.999% Reinheit) wird erreicht.

Figur 7 zeigt in perspektivischer Ansicht eine Schaufel 120, 130 als beispielhaftes Bauteil 1, die sich entlang einer Längsachse 121 erstreckt.

Die Schaufel 120 kann eine Laufschaufel 120 oder Leitschaufel 130 einer Strömungsmaschine sein. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher (nicht dargestellt) auf.

Als Schutz gegen Korrosion weist die Schaufel 120, 130 beispielsweise entsprechende meistens metallische Beschichtungen auf und als Schutz gegen Wärme meistens noch eine keramische Beschichtung.

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Die Substrate der Bauteile weisen eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden nickel- basierte Superlegierungen verwendet.
Solche Superlegierungen sind beispielsweise aus der EP 1 204 776, EP 1 306 454, EP 1 319 729, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verwendung eines Schutzgasgemisches beim Schweißen von nickelbasierten Substraten (4),
wobei die Substrate (4) Eisen gar nicht als Legierungsbestandteil enthalten, sondern Eisen höchstens in Form von unerwünschten Verunreinigungen enthalten ist,
und das Schutzgasgemisch Argon (Ar) und
1 bis 20 vol% Stickstoff (N₂) enthält zur Verringerung der Bildung von niedrigschmelzenden Phasen auf den Korngrenzen oder Oberflächen (16) des Substrats (4), um die Heißrissanfälligkeit zu verringern, **dadurch gekennzeichnet, dass** der Werkstoff des Substrats (4) eine gerichtet erstarrte Struktur aufweist.

2. Verwendung eines Schutzgasgemisches nach Anspruch 1, das zusätzlich 0,3 bis 25 vol%,
insbesondere 0,5 bis 3 vol%,
Wasserstoff (H₂) zur Verringerung einer Oxidbildung auf den Korngrenzen oder Oberflächen (16) des Substrats (4) enthält.

3. Verwendung eines Schutzgasgemisches nach Anspruch 1, dessen Stickstoffgehalt bei 3 vol% liegt.

4. Schutzgasgemisch nach Anspruch 2,
dessen Wasserstoffgehalt bei 0,7 vol% liegt.

5. Verwendung eines Schutzgasgemisches nach Anspruch 1, bei der einer Oberfläche (16) des Substrats (4) als Schweißzusatzwerkstoff Pulver (10) zugeführt wird, das mittels einer Anode (7) aufgeschmolzen wird und wieder erstarren gelassen wird.

6. Verwendung eines Schutzgasgemisches nach Anspruch 6, bei der die Erstarrung des aufgeschmolzenen Pulvers (10) in der Weise durchgeführt wird, dass nach dem Erstarren eine gerichtet erstarrte Struktur aufweist.

7. Verwendung eines Schutzgasgemisches nach Anspruch 1, bei der das Schweißen bei neu hergestellten Bauteilen (1) angewendet wird.

8. Verwendung eines Schutzgasgemisches nach Anspruch 1, bei der das Schweißen bei wiederaufzuarbeitenden Bauteilen (1) angewendet wird.

9. Verwendung eines Schutzgasgemisches nach Anspruch 1 oder 5,
bei der der Werkstoff des Substrats (4) Stickstoff nicht als Legierungsbestandteil enthält.

10. Verwendung eines Schutzgasgemisches nach Anspruch 1, bei der der Werkstoff des Substrats (4) ausscheidungsgehärtet ist.

11. Verwendung eines Schutzgasgemisches nach Anspruch 1,
bei der der Werkstoff des Substrats (4) keine Ferrite bildet.

## Claims

1. Use of a shielding gas mixture for the welding of nickel-base substrates (4),
wherein the substrates (4) do not contain iron as an alloying constituent, but iron is present at most in the form of undesired impurities, and the shielding gas mixture contains argon (Ar) and 1 to 20% by volume of nitrogen (N₂) to reduce the formation of low-melting phases at the grain boundaries or surfaces (16) of the substrate (4), in order to reduce the susceptibility to hot cracking, **characterized in that** the material of the substrate (4) has a directionally solidified structure.

2. Use of a shielding gas mixture according to Claim 1,
said mixture additionally containing 0.3 to 25% by volume, in particular 0.5 to 3% by volume,
of hydrogen (H₂) to reduce oxide formation at the grain boundaries or surfaces (16) of the substrate (4).

3. Use of a shielding gas mixture according to Claim 1,
said mixture containing 3% by volume of nitrogen.

4. Shielding gas mixture according to Claim 2,
said mixture containing 0.7% by volume of hydrogen.

5. Use of a shielding gas mixture according to Claim 1,
in which powder (10) is supplied to a surface (16) of the substrate (4) as a welding additive, is melted by means of an anode (7) and is allowed to resolidify.

6. Use of a shielding gas mixture according to Claim 5,
in which the molten powder (10) is solidified in such a way that
it has a directionally solidified structure after solidification.

7. Use of a shielding gas mixture according to Claim 1,
in which the welding is applied for newly produced components (1).

8. Use of a shielding gas mixture according to Claim 1,
in which the welding is applied for components (1) to be refurbished.

9. Use of a shielding gas mixture according to Claim 1 or 5, in which the material of the substrate (4) does not contain nitrogen as an alloying constituent.

10. Use of a shielding gas mixture according to Claim 1,
in which the material of the substrate (4) is subjected to dispersion-hardening.

11. Use of a shielding gas mixture according to Claim 1,
in which the material of the substrate (4) does not form any ferrites.

## Revendications

1. Utilisation d'un mélange gazeux de protection lorsque l'on soude des substrats ( 4 ) à base de nickel,
dans lequel le substrat ( 4 ) ne contient absolument pas de fer comme constituant d'alliage
et le mélange de gaz de protection contient de l'argon ( Ar ) et
de 1 à 20% en volume d'azote ( N₂ ) pour diminuer la formation de phases à bas point de fusion sur les joints de grain ou les surfaces ( 16 ) du substrat ( 4 ), afin de diminuer la tendance à se fissurer à chaud, **caractérisée en ce que**
le matériau du substrat ( 4 ) a une structure solidifiée de manière dirigée.

2. Utilisation d'un mélange gazeux de protection suivant la revendication 1,
qui contient en outre de 0,3 à 25% en volume,
notamment de 0,5 à 3% en volume,
d'hydrogène ( H₂ ) pour diminuer une formation d'oxyde sur les joints de grain ou sur les surfaces ( 16 ) du substrat ( 4 ).

3. Utilisation d'un mélange gazeux de protection suivant la revendication 1, dont la teneur en azote est de 3% en volume.

4. Utilisation d'un mélange gazeux de protection suivant la revendication 2, dont la teneur en hydrogène est de 0,7% en volume.

5. Utilisation d'un mélange gazeux de protection suivant la revendication 1, dans laquelle on apporte à une surface ( 16 ) du substrat ( 4 ), comme matériau supplémentaire de soudage, de la poudre ( 10 ), qui est fondue au moyen d'une anode ( 7 ) et que l'on laisse se solidifier à nouveau.

6. Utilisation d'un mélange gazeux de protection suivant la revendication 6, dans laquelle on effectue la solidification de la poudre ( 10 ) fondue, de manière à avoir, après la solidification, une structure solidifiée de manière dirigée.

7. Utilisation d'un mélange gazeux de protection suivant la revendication 1, dans laquelle on applique la soudure à des éléments ( 1 ) nouvellement fabriqués.

8. Utilisation d'un mélange gazeux de protection suivant la revendication 1, dans laquelle on applique la soudure à des éléments ( 1 ) à remettre à neuf.

9. Utilisation d'un mélange gazeux de protection suivant les revendications 1 ou 5, dans laquelle le matériau du substrat ( 4 ) contient de l'azote non comme constituant d'alliage.

10. Utilisation d'un mélange gazeux de protection suivant la revendication 1, dans laquelle le matériau du substrat ( 4 ) est durci par précipitation.

11. Utilisation d'un mélange gazeux de protection suivant la revendication 1, le matériau du substrat ne forme pas de ferrite.
